(19)

Europäisches
Patentamt
European
Patent Office
Office européen
des brevets

(11) **EP 1 848 217 A1**

(12) **EUROPEAN PATENT APPLICATION**

| | |
|---|---|
| (43) Date of publication:<br>**24.10.2007  Bulletin 2007/43** | (51) Int Cl.:<br>**H04N 7/26** (2006.01)     **H04N 7/24** (2006.01) |

(21) Application number: **06112878.1**

(22) Date of filing: **21.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **STMicroelectronics S.r.l.**<br>**20041 Agrate Brianza (Milano) (IT)** | (72) Inventor: **Benussi, Flavio**<br>**16148 Genova (IT)**<br><br>(74) Representative: **Bosotti, Luciano**<br>**c/o Buzzi, Notaro & Antonielli d'Oulx Srl,**<br>**Via Maria Vittoria 18**<br>**10123 Torino (IT)** |

(54) **A bit rate control method for video encoder applications, related system and computer program product**

(57)     A Bit Rate Control (BRC) system (12) for an encoder (10) receiving an input video signal (I) and generating therefrom an output digital video signal (I), where the output digital video digital signal (O) is quantized with at least one quantization parameter (Qp). The Bit Rate Control (BRC) system (12) is configured for controlling the bit rate of the output digital video signal (O) by:
- selectively removing pictures/frames from the video signal (I), and
- selectively varying the quantization parameter (Qp).

Fig_1

**Description**

Field of the invention

The invention relates to bit rate control techniques for video encoder applications.

Description of the related art

In general terms, an encoder is a device used to encode a signal or data into a form that is acceptable for transmission or storage. This is usually done by means of a programmed law or algorithm, especially if any part is digital. For instance, MPEG video encoding (MPEG being an acronym for Moving Pictures Expert Group) is a well-known process of converting a video signal to the MPEG format for distribution or for archiving onto DVD.
For a general survey on these topics reference may be had e.g. to:

- ITU-T SG16 VCEG Q15-A-20: Rate Control for Low-Delay Video Communications;

- OMA, MMS Conformance Document v.2.0.0;

- 3GPP TS 26.140 v.5.2.0, 3rd Generation Partnership Project; Technical Specification Group Services and System Aspects; Multimedia Messaging Service (MMS); Media Formats and Codecs (Release-5);

- ITU-T SG16 VCEG Q15-A-59: Video Codec Test Model, Near-term, version 8 (TMN8) - Release 0;

- ITU-T, Series H: Audiovisual and Multimedia Systems - Recommendation H.263, Appendix III: Examples for H.263 encoder/decoder implementations;

- ITU-T Recommendation H.263, Video Coding for low bit rate communication;

- ITU-T SG9 COM9-80-E, June 2000, Final Report from the Video Quality Expert Group on the validation of objective models of the video quality assessment;

- SYMBIAN MSL 1.0 Video Recording API Specification - version 1.04, John Turner - MSL 1.0 Video Working Group.

In general terms, given a certain signal to be encoded, the resulting (encoded) bitstream will exhibit a bit rate dependent on i) the law or algorithm used for encoding, and ii) the parameters used for encoding purposes. Being able to control the encoding process to correspondingly control the resulting (encoded) bit rate is thus a key requirement to be met for all those application scenarios where use of different channels (or channel having characteristics varying over time) and/or different carriers is contemplated for transmitting and storing an encoded bitstream.

Object and summary of the invention

The object of the invention is thus to provide an improved video encoder, adapted to successfully cope with contexts of use and operational requirements that may vary, even appreciably, over time. This with special emphasis placed on the possible use in low-bit bit rate applications in digital video compression systems such as MPEG-2, MPEG-4, H.263 and H.264.
According to the present invention, that object is achieved by means of a method having the features set forth in the claims that follow. The invention also relates to a corresponding system (i.e. a Bit-Rate Controller of BRC), a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.
The claims are an integral part of the disclosure of the invention provided herein.
A preferred embodiment of the arrangement described herein takes the form of two controller modules for digital video compression systems such as MPEG-2, MPEG-4, H.263 and H.264. The main task of these kinds of modules, generally named BRCs (Bit Rate Controllers), is to help the video compression system (i.e. the encoder proper) to generate a compressed video bit-stream of a certain size (in bytes). It has to allocate a certain quantity of bits as close as possible to a given target value, in a given time window.

A typical application scenario of the BRC arrangement described herein will be mobile systems, such as cellular phones, PDAs, etc.. The BRC arrangement described herein is however at least partly adapted to operate in other contexts such as consumer applications and so on.

Brief description of the annexed representations

The invention will now be described, by way of example only, with reference to the enclosed figures of drawing, wherein:

- Figure 1 is a general block diagram of an encoder module equipped with a bit rate controller (BRC) function as described herein;
- Figure 2, including two portions designated a and b, respectively, is representative of bit rate vs. Quantization parameter (Qp) performance results of the arrangement described herein when applied to MPEG-4 Simple Profile encoding of two reference QCIF sequences; and
- Figure 3, again including two portions designated a and b, respectively, is representative of rate mode function vs. Quantization parameter (Qp) performance results of the arrangement described herein when applied to MPEG-4 Simple Profile encoding of the same two reference QCIF sequences.

Detailed description of preferred embodiments of the invention

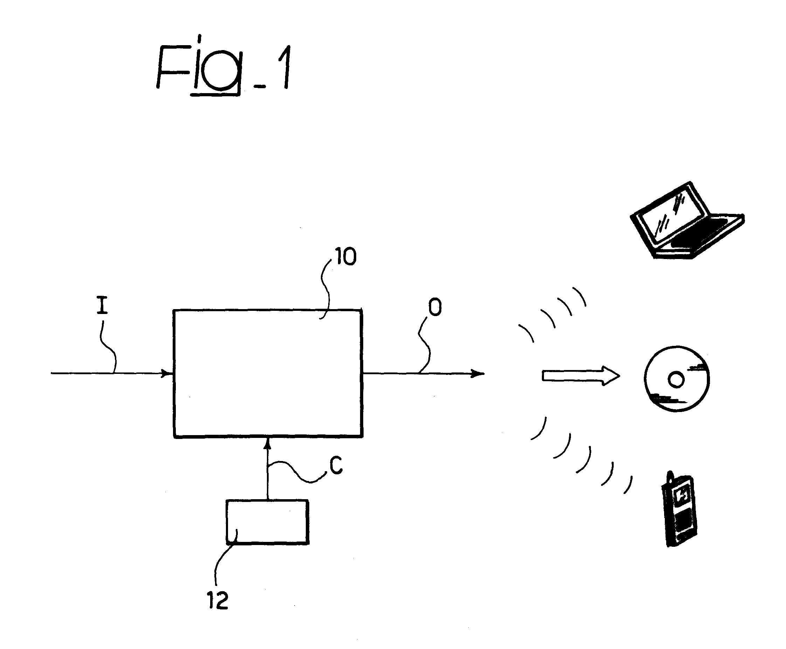

In Figure 1, reference 10 designates a video encoder adapted to encode an input video signal I (such as a video signal in the form of a digital bitstream) into an output digital signal O having a form that is acceptable for transmission or storage over a medium or carrier (not shown). Essentially the encoder 10 implements a programmed encoded law or algorithm, as better detailed in the following, based on a bit-rate control signal applied to an input terminal C via a bit-rate controller (briefly BRC) 12. In the description that follows, for the sake of simplicity, the bit-rate controller 12 will be considered as an integral part of the encoder 10.

Essentially, the encoder 10 is adapted to operate in two basic scenarios:

- low-bit-rate, low-delay compressed digital video bit-stream generation for real time encoding and transmission over a RF channel;
- low and high bit-rate compressed digital video bit-stream generation for MMS (Multimedia Messaging Service) and Local Video Recording (in practice a Video-cam recorder in a mobile terminal such as a mobile phone) .

The two approaches/scenarios differ in the time window of the control task; the former must respect the bit-target in the time frame of a picture (typically 15/30 pictures per second), the letter must respect the bit-target in the time frame of the whole video-clip length (any: 10sec, 5min, 1hour, etc.).

The Bit-Rate Control (BRC) task is typically performed through two main actions:

- bit reduction by picture (or frame) removal from the video bit-stream, which does not represent per se a, ideal choice due to the inherent quality drawback deriving therefrom; and
- modulation of a so-called quantization parameter Qp: high values of this parameter lead to a reduced number of bits and a worse quality and vice versa.

Despite some established different usage, throughout this description (and the claims appended thereto) the terms "picture" and "frame" will be used as essentially equivalent to each other. This will apply primarily to the repeated reference to Intra (I) and Predicted (P) pictures/frames.

The related concepts and the underlying technology (including the basic principles of video signal quantization) form part of the basic information background expected to be currently available to any person skilled in the art of video signal encoding: therefore a detailed presentation of these basic concepts and technology is not included in this detailed description.

By way of introduction, four different application scenarios will now be briefly described where the encoder BRC arrangement here described can be used in a particularly advantageous manner.

Videoconference

In video communications, the end-to-end delay in transmitting the video data must be very low, especially in two-way, real-time video applications such as videophone or videoconferencing. Typically, the major component of the delay is the time taken by the video frames to go through the fixed-rate communication channel, or the channel delay.

In practice, the video source is captured and encoded at a given frame rate F (in frames per second) and the coded bits are sent through a communication channel of fixed rate R (in bits per second). Hence, up to B=R/F bits can be sent during each frame interval of 1/F seconds. If the first frame to be encoded occupies B' bits, and B' is larger than B, the (B'-B) bits that cannot be sent during this frame interval remain in the encoder buffer, and are sent during the next interval(s). Clearly, the decoder will have to wait (B'-B)/R further seconds after the frame interval to receive all the bits. Conversely, if B' is smaller than B, the decoder will receive the bits for the frame within its frame interval, but (B-B') bits will be wasted.

Therefore, an efficient rate control method for low-delay communications should encode the video frames with approximately B bits, thus minimizing the delay.

To guarantee the minimum delay, the encoder buffer is kept inasmuch as possible at its minimum value of fullness. In this scenario, a Low Delay CBR has to be used, with the HRD buffering scheme, which allows buffer delay minimization.

H.263 Baseline (BL), H.263 P3 and MPEG-4 Short Header (SH) codec would in principle be used in this configuration. Alternative codec arrangements may include MPEG-4 Visual Simple Profile Level 0 and 1, or alternatively H.263 Profile 0 Level 10. If possible, also MPEG-4 Visual Simple Profile Level 2 and 3 as well as H.263 Profile 0 Level 20 and 30 should be supported.

In particular, in order to minimize delay, the encoder will introduce a single Intra frame as a first frame without any other cyclic Intra picture/frame (i.e. GOP length is infinite) . This is due to the fact that an Intra frame is typically encoded with a much higher bit number than the P pictures/frames, thus introducing a longer delay in the bitstream transmission.

Using H.263 codecs, in case a bitstream is received with bad quality or errors, the decoder can send to the encoder an Intra Forcing request, which forces the introduction of an Intra picture/frame to recover the situation. Of course, when an Intra picture/frame is forced, the same delay situation appears as is the case when the first Intra picture/ frame is generated.

An alternative to the Intra Forcing request is the Adaptive Intra Refresh (AIR) mode. While originally introduced for the MPEG-4 standard, this technique can be possibly used also in H.263 (although not expressly provided for in the related standard). This technique allows Macroblock (MB) Intra refresh in an adaptive way, depending on the sequence motion content, in order to limit the appearance of errors at the decoder, in the presence of error-prone channels.

The maximum number of macroblocks (MBs) processed with Adoptive Intra Refresh in videoconference mode is 3 for the QCIF i.e. Quarter Common Intermediate Format (176 pixels by 144 lines, 30 fps; 1.22:1) and 12 for the CIF i.e. Common Intermediate Format (352 pixels by 288 lines, 30 ps; 1.22:1) in order to comply inasmuch as possible with the low-delay constraints.

When a single Intra bitstream is generated, it is important to have the Cyclic Macroblock Intra Refresh (CIR) function enabled, in order to avoid DCT (Discrete Cosine Transform) error mismatch problems, which can appear when a MB is not coded in Intra mode at least once every 132 pactures/frames. In the presence of a finite GOP Group-of-Picture length lower than 133, the CIR function is automatically disabled both in MPEG-4 and H.263 encoders. A maximum number of 2 MBs per picture/frame is refreshed Intra when CIR mode is enabled.

See-What-I-See (SWIS)

Another possible application scenario of the arrangement described herein is the See-What-I-See (SWIS) mode. This basically relies on a videoconference modality, but only the upstream is considered, in that real-time transmission of a video streams at a constant bit rate needs to be preserved inasmuch as possible, but the low delay constraint can be somehow relaxed.

As an example, one may consider the possibility of transmitting to a receiver a video movie while this is being filmed. While the need arises of complying inasmuch as possible with the nominal channel bit rate, having a notional zero delay is not so vital as in videoconferencing. The receiver can sustain delays even of the order of a few seconds (i.e., 1-3 sec) without any problem.

In this scenario, a CBR (Constant Bit Control) could be used in conjunction with a VBV (Video Buffer Verifier) buffering scheme, for which the delay cannot be minimized such as with the HRD. But, despite of the SWIS modality can thus be supported by the CBR with the HRD buffer compliancy, as the low-delay BRC in a videoconference scenario.

This means that, from a standard point of view, in the SWIS mode only the MPEG-4 P0-3 encoder has to be used (since VBV is not foreseen for MPEG-4 SH and H.263), but in a non-standard configuration this mode could be used also with MPEG-4 SH and H.263 BL/P3.

A MPEG-4 P0-3 codec would be preferably used in this configuration. Alternative codecs inlcude: H.263 Profile 0 Level 10, or alternatively MPEG-4 Visual Simple Profile Level 0 and 1. If possible, also H.263 Profile 0 Level 20 and 30 as well as MPEG-4 Visual Simple Profile Level 2 and 3 should be supported.

In the SWIS scenario, the following requirements will generally apply:

- CBR with HRD buffer;
- Single Intra used as first picture/frame, followed by P pictures/frames only;
- AIR can be applied, but the maximum number of MBs refreshed by AIR is 10 for QCIF and 20 for CIF format (these results can be defined by simulations);
- CIR can be applied, with the same constraints as per videoconference.

Multimedia Messaging Service (MMS)

The Multimedia Messaging Service (MMS) is a messaging service for the mobile environment standardized by the WAP forum and 3GPP. In particular, the MMS adds images, text, audio clips and ultimately, video clips to SMS (Short Message Service/text messaging).

Indofar as video content creation is concerned, the user needs to create a short video to be submitted (generally, not in real time) to the MMS server; this means that the user exploits the mobile phone camera to acquire a short video sequence, stores it locally in the phone, and eventually sends it to the final receiver via the MMS server.

This scenario involves a set of typical constraints to be complied with:

- the frame-rate must not exceed 15000/1001 fps;
- the bit-rate must be equal to or less than 64,000 bit/sec;
- the minimum duration of a video sequence to be encoded is 10sec;
- an indication on 15sec for the target duration of a video sequence to be encoded;
- the minimum length of a MMS clip is 30Kb;
- the maximum total size of the MMS clip which is 95Kb for the standard video messaging class and 295Kb for the video rich messaging class.

H.263 Profile-0 Level-10 is preferably used, and the produced video stream must be compliant with the buffering model specified in Annex-G of the 3GPP Packet Switched Streaming (PSS).

Since a minimum duration of the video sequence is assumed, additional constraints apply on the Bit Reduction Control (BRC) function, leading to an intermediate solution between CBR (Constant Bit Rate) and VBR (Variable Bit Rate). In this case, if the minimum duration has to be guaranteed, the quality may need to be reduced in the above mentioned example, e.g. for complex sequences expected to be encoded at high quality, since the minimum duration constraint is priority.

It must be possible to insert Intra coded pictures/frames, to allow fast search functions, such as Fast Forward, Fast Rewind, etc.

As regards the MMS application scenario, the following contraints/requirements will typically apply:

- VBR bit rate control scheme;
- a first Intra picture/frame followed by P pictures/frames only or P pictures/frames with regularly spaced I pictures/frames (in the range of 3-10 sec) to allow fast-forward and rewind functionality; CIR can be applied, with the same constraints of videoconference.

Local Video Recording

Local Video Recording refers to the possibility of encoding and storing locally, for instance in a mobile terminal such as a phone, a video sequence. The scenario is very similar to the configuration described above for MMS, where the only constraints are the video quality to be defined and the maximum file size to be reached, which can depend by the available memory amount.

For the local video recording application scenario, the following constraints/requirements will typically apply:

- VBR bit rate control scheme;
- image size up to VGA, i.e. Video Graphics Array (640 by 480 pixels; 1.33:1 aspect ratio).

Different bit rate control techniques defined and tested to support the above described application scenarios will now be described.

A first point of interest is the so-called Rate Model. The rate model is derived by analyzing the behavior of several video sequences encoded with a fixed quantization step Qp, e.g. in a range between 2 and 31.

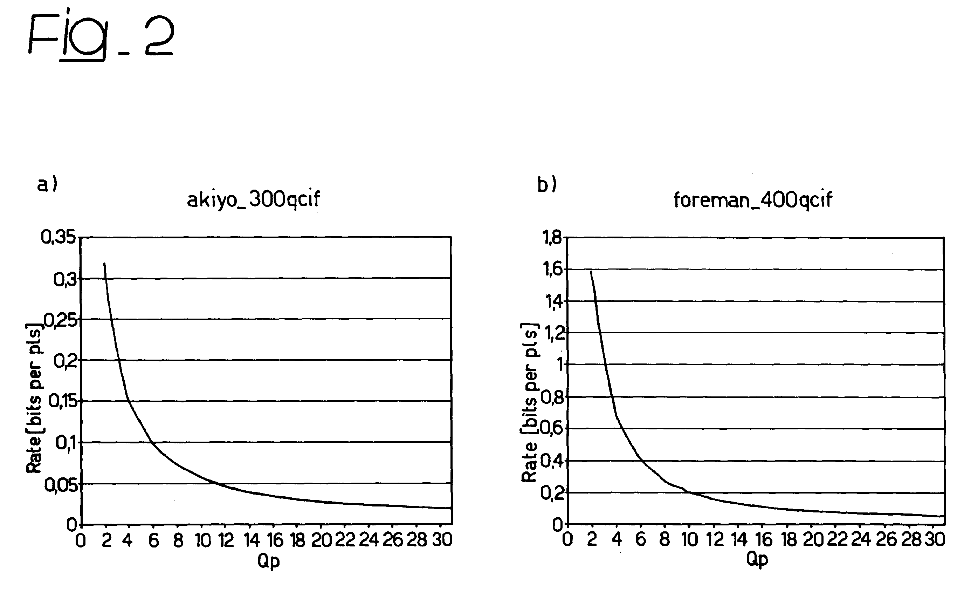

By analyzing the relationship plots between Qp values and rate of the bit-streams, similar shapes have been found for the different sequences (examples in fig 2). Specifically, Figures 2a and 2b are two bit-rate vs. Qp comes for the well-known QCIF sequences designated Akiyo and Foreman obtained using Q MPEG-4 Simple Profile Encoder. A first hypothetical rate control method might consist in generating a table of correspondences between QPs and bit-rate, which could be implemented by mapping encoding information from previous encoded frames. This would enable the encoder 10 to adapt to the different sequences. A better alternative (the reduces memory waste) lies in finding a relationship existing between the quantization parameter Qp and the bit-rate that is equal for all sequences.

Certain studies on DCT based encoding systems show two analytic approximations which link the pixel variance to the bit-stream entropy for a given value of the quantization parameter. The relationship in low-bit-rate conditions is described in the following function:

$$H(Q) = K \cdot \frac{\sigma^2}{Q^2}$$

$H(Q)$:*entropy*
$\sigma^2$:*motocompensated_pixels_*var*iance*
$Q$:*quantization_parameter*
$K$:*const.*

Considering that entropy can be approximated with the picture rate (in bits per pixel), one can state that H(Q) is measurable and no longer a function of Q. A basic idea lies in that in a time period while the motocompensated pixels variance does not change (i.e. constant bit-stream behavior), one can consider this relationship constant at low bit-rates:

$$H \cdot Q^2 = K \cdot \sigma^2 \ = \texttt{constant}$$

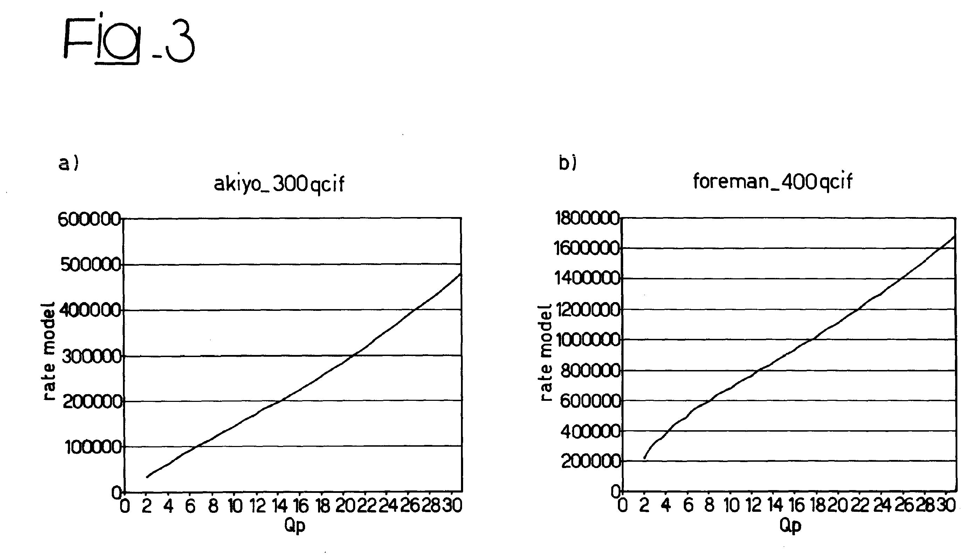

Figure 3 shows two examples of the quite linear behavior of the "rate model" defined in the foregoing with respect to the quantization parameter.

At high bit-rates, the relationship described is no longer linear. This nonlinear behavior is visible at low values of the quantization parameter in the "Foreman" plot in figure 3b. In fact, when the bit-per-pixels value of a bit-stream exceeds the level of ~0.3bit/pel the rate model should be somehow compensated to reach a good prediction.

Two implementations (CBR and VBR) of such rate model will now be described.

Constant Bit-Rate Control (CBR) v3.0 Algorithm

At the frame level, the CBR (Constant Bit-Rate) algorithm performs the following tasks:

1 - Frame skipping decision;
2 - Picture Target computation;
3 - Rate model update;
4- Computation of the picture level quantization parameter;
5 - Computation of the macroblock level quantization parameter.

The frame skipping decision is typically supported by three different buffer schemes VBV, HRD and Customized LD-VBV.

Those schemes can be implemented following the Symbian Video Recording API Specification or the MPEG-4 VBV standard specifications or the h.253 HRD standard specifications or the h.264 HRD standard specifications, depending of the involved video compression encoder.

In the detailed description that follows the following definitions/designations apply:

- bitstream_size: number of bits used to encode the current picture/frame
- BUFFER: buffer fullness up to the current encoded picture/frame
- PrevBUFFER: buffer fullness up to the previous encoded picture/frame
- VBV_occ is VBV occupancy defined in the MPEG-4 standard
- VBV_size is VBV size defined in the MPEG-4 standard

- Smax is Smax defined in the h.263 standard
- Skipcur is the skip parameter skipcur initialized to 1

The target value of bits to be used to encode the current I or P picture/frame depends of the buffering scheme in use, VBV, HRD or Custom LD-VBV.

No bit-target per picture/frame is computed while encoding in Control-Picture modality. In fact, this control module receives from the upper layers as an input the target value of bits to be used to encode the current I or P picture/ frame, following the Symbian Video Recording API specifications.

An I_picture_TARGET value for the VBV buffering model is defined to reach the best tradeoff between two conflicting aspects as spatial and temporal quality.

So two constraints or "points of view" have been taken in consideration:

i) a "spatial quality" point of view: reach a subjective I picture/frame quality to fit inasmuch as possible the subjective quality of the adjacent P pictures/frames;

ii) a "temporal quality" point of view: minimize frame skipping.

In practical terms, of SQCIF (Sub-Quarter Common Interchange Format - 128x96 pixel image size), QCIF, CIF and VGA sequences, these translate into the following relationships:

SQCIF and QCIF

$$I\_picture\_TARGET = \frac{bit\_rate}{framerate} + \frac{3}{4}\left(VBV\_occ - BUFFER\right);$$

CIF and VGA

$$I\_picture\_TARGET = \frac{bit\_rate}{framerate} + \frac{1}{2}\left(VBV\_occ - BUFFER\right);$$

$$P\_picture\_TARGET = \frac{bit\_rate}{framerate} - \frac{BUFFER - TARGET\_buffer\_level}{6};$$

where:

$$TARGET\_buffer\_level = \frac{VBV\_occ}{2};$$

Additionally, in order to avoid buffer underflow in the VBV modality, the value of I or P picture/frame target value must be greater than Tmin_UF. This is the minimum number of bits that the current picture/frame has to occupy to avoid buffer underflow:

$$T\min\_UF = MAX\left(0, \frac{bit\_rate}{framerate} - BUFFER\right)$$

The I_picture_TARGET value for the HRD and LD-VBV buffering models has been similarly defined to reach the best tradeoff between two conflicting aspects such as spatial and temporal quality. Again, two constraints have been taken in consideration:

i) a "spatial quality" point of view: reach a subjective I picture/frame quality to fit inasmuch as possible the subjective quality of the adjacent P picture/frames;
ii) a "temporal quality" point of view: minimize frame skipping.

These translate into the following relationships:

$$I\_picture\_TARGET = 1.875 \cdot \frac{bit\_rate}{framerate} - BUFFER \quad ;$$

$$P\_picture\_TARGET = \frac{bit\_rate}{framerate} - (BUFFER - TARGET\_buffer\_level)$$

;

where:

$$TARGET\_buffer\_level = 0.1 \cdot \frac{bit\_rate}{framerate}$$

.

Two different rate models have been implemented: one for I picture/frames and one for P picture/frames.
For I picture/frames the Variable Bit-Rate (VBR) rate model is implemented by simply storing the last encoded I picture/frame size (last_I_Size) and the corresponding Qp used to encode the picture/frame itself (I_Qp). Then the quantization parameter of the current I frame is computed on the ground of last_I_Size, I_Qp and the current Intra picture/frame target.
For P pictures/frames the VBR rate model is implemented through two variables: comp_SUM and comp_count. In the starting phase of the encoding process such parameters are initialized to zero: i.e. comp_SUM = 0, comp_count = 0. Then, after the encoding task of each frame, the parameters are updated as follows:

$$comp\_SUM \mathrel{+}= S\_coeff \cdot avg\_Qp^2;$$

$$comp\_count \mathrel{+}= 1;$$

where S_coeff is the number of bits used just for DCT coefficients (not overhead) to encode the latest P-picture/frame and avg_Qp is the average quantization parameter at macroblock level used to encode the latest P-picture/frame.
The quantization parameter at frame and macroblock level is computed on the ground of comp_SUM, comp_count.
An additional updating of those two parameters is performed every time a change of the sequence behavior occurs. Then a variable named change_scene is set to 1 and one of the following tests is checked to be true:
In the case of the VBV buffering method:

if

$$\left( \text{bitstream\_size} < \frac{P\_picture\_TARGET}{2} \right) \quad \text{or} \quad (/* \text{ test of error}$$

made whenencoding the previous frame */)

$$\left( \text{bitstream\_size} > 2 \cdot P\_picture\_TARGET \right) \quad \text{or} \quad (/* \text{ test of}$$

error made whenencoding the previous frame */)

$$\left( \text{skipcur} = 1 \right) \quad \text{or} \quad (/* \text{ test of previous}$$

frame skipping status */)

$$\left( \text{comp\_SUM} > 1073741824 \right) \quad \text{or} \quad (/* \text{ test to avoid 32}$$

bits overflow */)

$$\left( \text{Stuff\_bits} > 0 \right) \quad (/* \text{ test of stuffing}$$

bits insertion */)

then change_scene = 1;

HRD and Custom LD-VBV buffering methods:

if

$$(\text{bitstream\_size} > S\max)$$ or (/* non strategic frame skipping test */)

$$(BUFFER = 0)$$ or (/* encoder buffer underflow test */)

$$\left(BUFFER > \frac{1}{2} \cdot \frac{bit\_rate}{framerate}\right)$$ or (/* encoder buffer fullness test */)

$$(\text{comp\_SUM} > 1073741824)$$ or (/* test to avoid 32 bits overflow */)

then change_scene $= 1$ ;

When change_scene is equal to 1, the condition of constant moto-compensated pixels variance is not verified, so the current model is no longer valid. As a consequence of this, the model is updated to increase the weight of latest picture/frame information:

```
if    change_scene=1 then
{
     old_comp      = comp_count;
     comp_count   = round( comp_count / 2 );
     comp_SUM     = comp_count * comp_SUM / old_comp ;
}
```

$$\text{old\_comp} = \text{comp\_count};$$
$$\text{comp\_count} = \text{round}\left(\frac{\text{comp\_count}}{2}\right);$$
$$\text{comp\_SUM} = \frac{\text{comp\_count} * \text{comp\_SUM}}{\text{old\_comp}};$$

For a given bit-rate, the rate model computes the quantization parameter to reach a desired bit-target, fitting at the same time the features of each sequence.
Different computations are performed for I and P pictures/frames. The evaluation of the quantization parameter for the n-th I-picture/frame is:

$$\text{I\_Qp}[n] = \text{round}\left(\sqrt{\frac{\text{I\_Qp}[n-1]^2 \cdot \text{last\_I\_Size}}{\text{I\_PicTarget}}}\right)$$

where I_Qp[n-1] is the Qp value of the previous I-picture/frame. The rounding ( round ( ) ) computation is performed to reach the integer value closest to the real square root result. The I_Qp value of the first I picture/frame (n=0) is set to 16.
The evaluation of the quantization parameter for the n-th P-picture/frame is computed as follows:

```
If  ( P_PictTarget - S_overhead  > 0 )
    then
```

$$P\_Qp[n] = round\left(\sqrt{\frac{comp\_SUM[n-1]}{(P\_PicTarget - S\_overhead) \cdot comp\_count}}\right);$$

```
    else
            P_Qp[n] = 31;
```

where comp_SUM [n-1] is the latest updated value of the rate model and S_overhedad is the number of bits used just for overhead (not DCT coefficients) to encode the latest P-picture/frame. The rounding computation is performed to reach the integer value closest to the real representation of the square root result. If the value of P_PictTarget - S_overhead is less than 0, then the value of P_Qp is set to 31. The P_Qp value of the first P picture/frame (when comp_SUM and comp_count are null) is set to 16.

As regards the computation of the macroblock (MB) level quantization parameter, at each MB, the number of bits used to encode the current picture up to the current MB, i.e. BITcount, is considered. BITcount is provided by a specific procedure present in the encoder, outside the BRC.

The Macroblock level rate control works differently depending on whether an Intra or a P picture/frame is encoded.

When encoding an Intra picture/frame the first MB is encoded using the frame level value of the quantization parameter, I_PictQp. Starting from I_PictQp the quantization parameter value for the i-th macroblock is computed on the basis of the average number of bits per macroblock, avgMBbits[i], and the bits left for the current picture/frame up to the current macroblock LEFTbits [i]:

```
            if LEFTbits [i] <= 0
```

$$I\_Qp[i] = 31$$

```
            if LEFTbits [i] > 0
```

$$I\_Qp[i] = round\left(\sqrt{\frac{avgMBbits[i] \cdot avgQp[i]^2 \cdot LEFT\_MB[i]}{LEFTbits[i]}}\right)$$

where avgQp[i] is the average value of the quantization parameters used up to the i-th macroblock in the current picture/frame and LEFT_MB[i] is number of remaining macroblocks to encode in the current picture/frame up to the i-th macroblock.

The first MB is encoded using the frame level value of the quantization parameter, P_PictQp. Starting from P_PictQp the quantization parameter values for the i-th macroblock is computed on the ground of comp_SUM and comp_count:

$$P\_Qp = round\left(\sqrt{\frac{comp\_SUM \cdot LeftMB[i]}{comp\_count \cdot MBnum \cdot L[i]}}\right)$$

where LeftMB[i] is number of remaining macroblocks to encode in the current picture/frame up to the i-th macroblock, while L has computed at MB level as follows:

$$L[i] = B[i] - C[i] \cdot LeftMB[i]$$

where B[i] is the amount of bits remaining until the P_PictTarget has reached, while C[i] represent the average contributes per macroblock of the overhead at the bit-stream.

When the bits per pixel are over 0.3bit/pls (bits-per-macrobolock > 76.8bit/MB) the rate model is no longer linear (see 3.1), then the P_Qp has adjusted as follows:

```
if ( BPP > 70 ) & ( P_Qp > 1 )
then Qp = Qp - 1;
```

Where BPP represents the bits-per-macroblock.

The relative standard requires that the difference between the Qp of two consecutive MBs does not exceed +/-2. This check is performed as follows:

Dquant    = Qp-prevQp;
Dquant    = CLIP_I(Dquant,-2,2);

Every picture/frame or macroblock values of the quantization parameters are returned to the external encoding tasks only after the following clip computation:

QP    = MIN (QP, maxQp);
QP    = MAX (QP, minQp) ;

where maxQp = 31, minQp= 2.

When generating MMS messages and recording video locally, the sequence is encoded and stored on the target system, for instance a mobile phone with a memory card. Although the encoded bitstream is recorded locally and not transmitted in real-time while encoding, there are certain constraint related to channel bit rate and to maximum buffer fullness to be respected. In particular, buffering compliancy as prescribed in the 3GPP Packet Switched Streaming Annex-G is required.

The arrangement described herein performs a control function both at the picture/frame and at the macroblock level.

In practice, a rate model is developed to compute the current picture/frame quantization level Qp on the basis of the bits used to encode the past pictures and the corresponding Qps. Rounding is applied in the computation since the result for Qp must be an integer. Then, the macroblock level control consists in a single macroblock Qp variation performed on the basis of the fractional part lost in the rounding computation at frame level. As far as the maximum bit-stream size is concerned, it is important that the encoding process is stopped as soon as it is detected that the new encoded frame make the final file size exceed the target file size.

The VBR v_2.0 Algorithm

At the frame level, the VBR algorithm performs the following tasks:

1 - Frame skipping decision (based on Annex-G or HRD Buffer strategy);.
2 - Picture Target computation;
3 - Rate model update;
4 - Computation of the picture level quantization parameter;
5 - Computation of the macroblock level quantization parameter;
6 - Spatial/temporal tradeoff control;

The algorithm operates on the basis of certain input parameters here described.

Bitrate

This represents the desired quantity of bits per second, it is an input parameter if the BRC works in Local Video Recording (LVR) modality. Otherwise, if the Multimedia Messaging Service (MMS) modality is set, it is evaluated as follows.

If the Annex-G buffering method is set:

$$Bitrate = \frac{Target\_File\_Size - \dfrac{\text{bitrate} \cdot \text{PDBP}}{2} + \dfrac{Bitrate}{Framerate}}{Target\_Duration} \; ;$$

If the HRD buffering method is set:

$$Bitrate = \frac{Target\_File\_Size}{Target\_Duration} \; ;$$

where:

Target_Duration: the target time duration of the MMS video-clip in seconds (default 15sec);
Target_file_Size: the target file size of the MMS video-clip in bits (default 778240 bits = 95Kbytes, value derived from the standard class MMS size = 100Kb);
PDBP : the Annex-G initial pre-decoder-buffering period (1 sec by default);

Framerate

This is the number of frames per second of the encoded video-clip bit-stream. It can be reduced through frame skipping;

Spatial Quality coefficient

This can assume four levels:

Disabled
Low Spatial Quality
Mid Spatial Quality
High Spatial Quality

This parameter forces the spatial quality of the pictures/frames (three levels: low, mid and high). This is done despite of the temporal rate of the video-clip. In fact, a larger amount of bits is generally required in frames with improved quality, so the buffer fullness control part of the BRC can lead to a more frequently frame skipping occurrence.

Temporal Quality coefficient

This is the minimum value that the real frame-rate can assume. The real frame-rate is defined as the frame-rate subtracted by the average number of frames skipped in a second.

Frame skipping decision

Two different buffer schemes are supported in the currently preferred emboidment of the arrangement described herein, namely Annex-G and HRD. Those schemes can be implemented following the Symbian Video Recording API Specification or the H.263 HRD standard specifications, depending on the video compression encoder involved.
The following definitions will thus apply:

PDBP : the Pre Decoder Buffering Period (default value = 1 sec) defined by Annex-G of the 3GPP

PDBS : the Pre-Decoder Buffer Size defined by Annex-G of the 3GPP Packet Switched Streaming (PSS)

prev_BUFFER          : the buffer fullness at the previous frame

Picture Target computation

The target value of bits to be used to encode the current I or P picture/frame depends of the buffering scheme in use, Annex-G or HRD.

Targets for the Annex-G buffering method

The I_picture/frame_TARGET for the 3GPP-PSS Annex-G buffering model has been defined to reach the best tradeoff between two conflicting aspects such as spatial and temporal quality. So again two constraints have been taken in consideration:

i) a "spatial quality", point of view: reach a subjective I picture/frame quality to fit as much as possible the subjective quality of the adjacent P picture/frames;
ii) a "temporal quality" point of view: this minimizes frame skipping.

In practical terms, as regards SQCIF, QCIF, CIF and VGA sequences, the following relationships will apply:

SQCIF and QCIF

$$I\_picture\_TARGET = \frac{bitrate}{framerate} + \frac{3}{4}(\text{bitrate} \cdot \text{PDBP} - BUFFER) \quad ;$$

CIF and VGA

$$I\_picture\_TARGET = \frac{bitrate}{framerate} + \frac{1}{2}(\text{bitrate} \cdot \text{PDBP} - BUFFER) \quad ;$$

$$P\_picture\_TARGET = \frac{bitrate}{framerate} - \frac{BUFFER - TARGET\_buffer\_level}{6} \quad ;$$

where:

$$TARGET\_buffer\_level = \frac{\text{bitrate} \cdot \text{PDBP}}{2} \quad ;$$

Additionally, in order to prevent buffer underflow in the Annex-G modality, the value for the I or P picture/frame target value must be greater than Tmin_UF. This is the minimum number of bits that the current frame has to occupy in order to avoid buffer underflow:

$$T\min\_UF = MAX\left(0, \frac{bitrate}{framerate} - BUFFER\right)$$

The value I_picture_TARGET for the HRD buffering model is defined to reach the best tradeoff between two conflicting aspects such as spatial and temporal quality.

Once again, two constraints have been taken in consideration:

i) a "spatial quality" point of view: reach a subjective I picture/frame quality to fit inasmuch as possible the subjective quality of the adjacent P picture/frames;
ii) a "temporal quality" point of view: minimize frame skipping.

$$I\_picture\_TARGET = \frac{3 \cdot \dfrac{bitrate}{framerate} - BUFFER}{2} \; ;$$

$$P\_picture\_TARGET = \frac{bitrate}{framerate} - \frac{BUFFER - TARGET\_buffer\_level}{6} \; ;$$

where:

$$TARGET\_buffer\_level = 0.1 \cdot \frac{bitrate}{framerate}$$

Two different rate models have been implemented: one for I picture/frames and one for P picture/frames.
The VBR rate model for I picture/frames is implemented simply by storing the last encoded I frame size (last_ I_Size) and the corresponding Qp used to encode the frame itself (I_Qp). Then the quantization parameter of the current I frame is computed on the basis of last_I_Size, I_Qp and the current Intra picture/frame target (see 3.3.1.2.2).
The VBR rate model for P picture/frames is implemented through two variables: comp_SUM and comp_count. In the starting phase of the encoding process such parameters are initialized to zero: i.e. comp_SUM = 0, comp_count = 0. Then, after the encoding task of each frame, they are updated as follows:

$$\text{comp\_SUM} \mathrel{+}= \text{bitstream\_size} \cdot round\left( \text{P\_Qp} + \frac{\text{MB\_QP\_adj}}{2} \right)^2 ;$$

$$\text{comp\_count} \mathrel{+}= 1 ;$$

where bitstream_size is the number of bits used to encode the latest P-picture/frame, P_Qp is the quantization parameter used to encode the latest P-picture/frame and MB_QP_adj is the dquant value for macroblock level Qp. MB_QP_adj could assume the values 0, 1 or -1.
At this point, the quantization parameter of the current P-frame is computed on the basis of comp_SUM, comp_ count and the current P-picture/frame target.
An additional updating of those two parameters is performed every time a change of the sequence behavior occurs. This event is recognized if one of the following tests is true; when this happens, a variable named change_scene is set to 1:

```
if
```

$$\left( \text{bitstream\_size} < \frac{P\_picture\_TARGET}{2} \right)$$ or (/* test of error

made when encoding the previous frame */)

$$\left( \text{bitstream\_size} > 2 \cdot P\_picture\_TARGET \right)$$ or (/* test of

error made when encoding the previous frame */)

$$\left( \text{skipcur} = 1 \right)$$ or (/* test of the

previous frame skipping status */)

$$\left( \text{comp\_SUM} > 1073741824 \right)$$ or (/* test to avoid 32

bits overflow */)

$$\left( \text{Stuff\_bits} > 0 \right)$$ (/* test of stuffing

bits insertion */)

```
then
```

$$\text{change\_scene} = 1 \; ;$$

When change_scene is equal to 1, the condition of constant moto-compensated pixels variance is not verified, so that the current model is no longer valid.

At this point, the model is updated in order to increase the weight of the information associated with the latest pictures:

```
if    change_scene=1 then
{
```
$$\text{old\_comp} = \text{comp\_count};$$
$$\text{comp\_count} = \text{round}\left( \frac{\text{comp\_count}}{2} \right);$$
$$\text{comp\_SUM} = \frac{\text{comp\_count} * \text{comp\_SUM}}{\text{old\_comp}};$$
```
}
```

Computation of the picture level quantization parameter.

For a given bit-rate, the rate model described in the foregoing, computes the quantization parameter to reach a desired bit-target, fitting at the same time the features of each sequence.

Different computations are performed for I and P pictures/frames.

The evaluation of the quantization parameter for the n-th I-picture/frame is:

$$I\_Qp[n] = round\left(\sqrt{\frac{I\_Qp[n-1]^2 \cdot last\_I\_Size}{I\_PicTarget}}\right)$$

where I_Qp [n-1] is the Qp value of the previous I-picture/frame. The rounding ( round ( ) ) computation is performed to reach the integer value closest to the real square root result. The I_Qp value of the first I picture/frame (n=0) is set to 16.

The quantization parameter for the n-th P-picture/frame is computed as follows:

$$P\_Qp[n] = round\left(\sqrt{\frac{comp\_SUM[n-1]}{P\_PicTarget \cdot comp\_count}}\right);$$

where comp_SUM [n-1] is the latest updated value of the rate model. The rounding computation is performed to reach the integer value closest to the real representation of the square root result. The P_Qp value of the first P picture/frame (when comp_SUM and comp_count are null) is set to 8. Contrary to what has bene made for the I picture/frame Qp computation, in the P case the fractional part of the square root calculation is considered for an eventual macroblock level Qp modification. In fact, if the fractional part of the square root is within the range between 0.25 and 0.75, the algorithm tries to reach an average MB Qp equal to P_Qp $\pm$ 0.5.

As regards the computation of the macroblock level quantization parameter, one may define float_QP as the real representation of the square root result:

$$float\_QP[n] = \sqrt{\frac{comp\_SUM[n-1]}{P\_PicTarget \cdot comp\_count}}$$

Then the correction value at the MB level for the Qp in the n-th frame, MB_QP_adj, is evaluated as follows:

```
if       float_QP[n] - P_QP [n] >     0.25 then
    MB_QP_adj [n] = 1;
else if       float_QP[n] - P_QP[n] <     - 0.25
    then MB_QP_adj [n]     = -1;
else
MB_QP_adj [n]     = 0;
```

At this point, the first half fraction of macroblocs in the n-th picture/frame is encoded using the P_QP value, while the second half part is encoded using the P_QP[n] + MB_QP_adj[n] value. Since the value of MB_QP_adj[n] can be -1, +1 or 0, just one change takes place in Qp. Consequently, in the worst case, no more than one quant type macroblock is used, which means that no more than 5 bits are wasted for Qp change overhead in each frame.

Every picture/frame or macroblock values of the quantization parameters are returned to the external encoding tasks only after the following clip computation:

```
QP    = MIN (QP, maxQp);
QP    = MAX (QP, minQp);
QP    = MIN (QP, min_pict_quality);
```

where maxQp = 31, minQp= 2 and min_pict_quality is the Spatial Quality Qp boundary as defined in the following.

A method to reach a tradeoff between spatial quality and temporal quality is preferably implemented. This ensures a minimum picture quality by forcing an upper boundary to the quantization parameter. In practice, it computes such boundary on the basis of two input parameters:

Spatial Quality level (Low, Mid and High);
Temporal Quality (minimum frame-rate),

where, depending on the Spatial Quality Level, a parameter called min_base_quality is initialized as follows:

Tradeoff Disabled : min_base_quality = 31;
LOW spatial quality : min_base_quality = 18;
MID spatial quality : min_base_quality = 13;
HIGH spatial quality : min_base_quality = 8;

min_base_quality is used to give a reference value to min_pict_quality, which is the real Qp boundary. In fact, min_base_quality is used for its initialization: i.e. min_pict_quality = min_base_quality.

An additive value for the Qp threshold, diff_min_quality, is also initialized in this phase: i.e, diff_min_quality = 0.

After the initializations, for each frame, the average number of encoded frames per second is evaluated as follows:

$$real\_framerate[n] = framerate \cdot \frac{n - TotSkip[n]}{n}$$

where n is the number of frames encoded up to now and TotSkip[n] is the number of skipped frames up to the n-th frame.

Within the first second of encoding, when no significant real_framerate value is available, min_pict_quality is computed as follows:

```
if (n ≤ framerate ) then
{
    if (prev_skip = 1) then min_pict_quality[n]
        += 1;
    else      min_pict_quality[n] =
    min_base_quality +5;

    min_pict_quality = MIN (min_pict_quality,
        maxQp );
}
```

where the prev_skip flag is equal to 1, every time the previous encoded frame has been skipped.

Finally, the temporary Qp threshold min_pict_quality is computed as follows:

```
if (n>framerate)      then

    min_pict_quality[n] =
    min_tot_quality[n] + diff_min_quality[n];
```

where temporary Qp threshold min_tot_quality is computed to fit in the average quantity of motion:

$$min\_tot\_quality = min\_base\_quality + \frac{avg\_seq\_SAD[n]}{500}$$

(avg_seq_SAD [n] is the average SAD value of the whole sequence up to the n-th picture/frame) and diff_min_quality is computed as follows:

```
if ( real_framerate < min_framerate) then
    diff_min_quality += 1;

else if ( real_framerate > min_framerate AND
    diff_min_quality > 0 )
```

```
then
    diff_min_qualit
y - = 1;
```

Without prejudice to the underlying principles of the invention, the details and the embodiments may vary, even appreciably, with reference to what has been described by way of example only, without departing from the scope of the invention as defined by the annexed claims.

**Claims**

1.   A method of bit rate control in an encoder (10) receiving an input video signal (I) and generating therefrom an output digital video signal (O), wherein said output digital video digital signal (O) is quantized with at least one quantization parameter (Qp), the method including the step of controlling the bit rate of said output digital video signal (O) by:

- selectively removing frames from said video signal (I), and
- selectively varying said quantization parameter (Qp).

2.   The method of claim 1, **characterized in that** it includes the steps of:

- generating an encoded digital video signal (0) including Intra frames, and
- introducing a single Intra frame as a first frame in said encoded digital video signal (0) without any other cyclical Intra frame, whereby the resulting group of pictures is of infinite length.

3.   The method of claim 1, **characterized in that** it includes the steps of:

- generating an encoded digital video signal (O) including Intra and Predicted frames, and
- including in said encoded digital video signal (O) a single Intra frame as a first frame followed by Predicted frames only.

4.   The method of claim 1, **characterized in that** it includes the steps of:

- generating an encoded digital video signal (O) including Intra and Predicted frames, and
- including in said encoded digital video signal (O) a single Intra frame as a first frame followed by Predicted frames with regularly spaced Intra frames.

5.   The method of any of the previous claims, **characterized in that** it includes the steps of:

- generating an encoded digital video signal (O) including Intra frames,
- receiving a signal indicative of an error in said output digital video signal (O), and attempting to recover said error by one of:

- i) forcing the introduction of an Intra frame in said output digital signal (O), and
- ii) performing a Macroblock Intra Refresh function, preferably a Cyclical Macroblock Intra Refresh function.

6.   The method of any of the previous claims, **characterized in that** it includes the steps of:

- identifying, for a set of test video frames being encoded, a relationship between said at least one quantization parameter and the bit-rate of said output digital video signal (O),
- storing said relationship as a mapped encoding information, and
- selectively varying said at least one quantization parameter as a function of said mapped encoding information.

7.   The method of any of the previous claims, **characterized in that** it includes the step of deciding whether frames must be selectively removed from said video signal as a trade off between the subjective quality of the pictures/ frmes in said output digital video signal (O) and the requirement of minimizing frame removal from said video signal.

8.   The method of claim 7, **characterized in that** it includes the steps of:

- generating an encoded digital video signal including Intra frames as well as Predicted frames, and
- determining said subjective quality as a function of the fitting of any of said Intra frames with adjacent Predicted frames.

9. The method of any of the previous claims, **characterized in that** it includes the steps of:

- deciding whether any frames are to be removed from said video signal (I),
- defining a target value of bits to be used to encode a current frame in said output digital video signal (0), and
- computing said quantization parameter to comply with said target value of bits.

10. The method of any of the previous claims, **characterized in that** it includes the step of selectively determining said at least one quantization parameter at the frame level.

11. The method of any of the previous claims, **characterised in that** it includes the step of selectively determining said at least one quantization parameter at the macroblock level.

12. A bit rate control system (12) for an encoder (10) receiving an input video signal (I) and generating therefrom an output digital video signal (0), wherein said output digital video digital signal (O) is quantized with at least one quantization parameter (Qp), the system (12) configured for controlling the bit rate of said output digital video signal (O) by:

- selectively removing frames from said video signal (I), and
- selectively varying said quantization parameter (Qp).

13. The system of claim 12, wherein said encoder (10) generates an encoded digital video signal (O) including Intra frames, the system (12) **characterized by** being configured for introducing a single Intra frame as a first frame in said encoded digital video signal without any other cyclical Intra frame, whereby the resulting group of pictures is of infinite length.

14. The system of claim 12, wherein said encoder (10) generates an encoded digital video signal (O) including Intra and Predicted frames, the system (12) **characterized by** being configured for including in said encoded digital video signal (O) a single Intra frame as a first frame followed by Predicted frames only.

15. The system of claim 12, wherein said encoder (10) generates an encoded digital video signal (O) including Intra and Predicted frames, the system (12) **characterized by** being configured for including in said encoded digital video signal (O) a single Intra frame as a first frame followed by Predicted frames with regularly spaced Intra frames.

16. The system of any of the previous claims 12 to 15, wherein said encoder (10) generates an encoded digital video signal (O) including Intra frames, the system (12) **characterized by** being configured for receiving a signal indicative of an error in said output digital video signal (O), and attempting to recover said error by one of:

- i) forcing the introduction of an Intra frame in said output digital signal (O), and
- ii) performing a Macroblock Intra Refresh function, preferably a Cyclical Macroblock Intra Refresh function.

17. The system of any of the previous claims 12 to 16, **characterized by** the fact that:

- the system (12) has stored therein, as a mapped encoding information, a relationship between said at least one quantization parameter and the bit-rate of said output digital video signal (O) said relationship identified for a set of test video frames being encoded, and
- the system (12) is configured for selectively varying said at least one quantization parameter as a function of said mapped encoding information.

18. The system of any of the previous claims 12 to 17, **characterized in that** the system (12) is configured for deciding whether frames must be selectively removed from said video signal as a trade off between the subjective quality of the frames in said output digital video signal (0) and the requirement of minimizing frame removal from said video signal.

19. The system of claim 18, wherein said encoder (10) generates an encoded digital video signal including Intra frames as well as Predicted frames, the system (12) **characterized by** being configured for determining said subjective quality as a function of the fitting of any of said Intra frames with adjacent Predicted frames.

20. The system of any of the previous claims 12 to 19, **characterized by** being configured for:

   - deciding whether any frames are to be removed from said video signal (I),
   - defining a target value of bits to be used to encode a current frame in said output digital video signal (O), and
   - computing said quantization parameter to comply with said target value of bits.

21. The system of any of the previous claims 12 to 20, **characterized by** being configured for selectively determining said at least one quantization parameter at the frame level.

22. The system of any of the previous claims 12 to 21, **characterised by** being configured for selectively determining said at least one quantization parameter at the macroblock level.

23. A computer program product, loadable in the memory of at least one computer and including software code portions for performing the method of any of claims 1 to 11.

Fig.-1

Fig. 2

a) akiyo_300qcif

b) foreman_400qcif

EP 1 848 217 A1

# Fig.3

a)

## akiyo_300qcif

b)

## foreman_400qcif

EP 1 848 217 A1

**European Patent Office**

**EUROPEAN SEARCH REPORT**

Application Number

EP 06 11 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | "ITU-T Recommendation H.263 - Video coding for low bit rate communication" ITU-T TELECOMMUNICATION STANDARDIZATION SECTOR OF ITU, January 2005 (2005-01), XP002404780 * paragraph [4. Source coder] * * Annex X - Profiles and levels definition * | 1-23 | INV. H04N7/26 H04N7/24 |
| D,Y | "ITU-T Recommendation H.263 - Appendix III: Examples for H.263 encoder/decoder implementations" ITU-T TELECOMMUNICATION STANDARDIZATION SECTOR OF ITU, June 2001 (2001-06), XP002404781 * paragraph [III. 2.2] * * paragraph [III. 4.2] * | 1-23 | |
| D,Y | RIBAS-CORBERA J ET AL: "RATE CONTROL FOR LOW-DELAY VIDEO COMMUNICATIONS" ITU TELECOMMUNICATIONS STANDARDIZATION SECTOR, 24 June 1997 (1997-06-24), pages 1-27, XP001100047 * the whole document * | 1-23 | TECHNICAL FIELDS SEARCHED (IPC) H04N |
| D,Y | GARDOS T R: "Video Codec Test Model, Near-Term, Version 8 (TMN8) Document Q15-A-59" ITU STUDY GROUP 16 - VIDEO CODING EXPERTS GROUP, XX, XX, 24 June 1997 (1997-06-24), pages 1-12, XP002364837 * the whole document * | 1-23 | |

-/--

The present search report has been drawn up for all claims

| Place of search | Date of completion of the search | Examiner |
|---|---|---|
| The Hague | 2 November 2006 | Wahrenberg, Annika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 11 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | "Digital cellular telecommunications system (Phase 2+); Universal Mobile Telecommunications System (UMTS); Multimedia Messaging Service (MMS); Media formats and coees (3GPP TS 26.140 version 5.2.0 Release 5)" ETSI STANDARDS, EUROPEAN TELECOMMUNICATIONS STANDARDS INSTITUTE, December 2002 (2002-12), XP002404782 * paragraph [4.7 Video] * ----- | 1-23 | |
| Y | REQUIREMETNS GROUP: "MPEG-4 Profile Requirements version 4.0" INTERNATIONAL ORGANISATION FOR STANDARDISATION ISO/IEC JTC1/SC29/WG11/N1728, July 1997 (1997-07), XP002404783 Stockholm * paragraph [0001] * * paragraph [0004] * ----- | 1-23 | |
| Y | BRUN P ET AL: "Subjective assessment of H.264/AVC video for low-bitrate multimedia messaging services" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 1145-1148, XP010785210 ISBN: 0-7803-8554-3 * the whole document * ----- -/-- | 1-23 | TECHNICAL FIELDS SEARCHED (IPC) |

The present search report has been drawn up for all claims

| Place of search | Date of completion of the search | Examiner |
|---|---|---|
| The Hague | 2 November 2006 | Wahrenberg, Annika |

EPO FORM 1503 03.82 (P04C01)

**European Patent Office**

**EUROPEAN SEARCH REPORT**

Application Number

EP 06 11 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PURI A ET AL: "MPEG-4: An object-based multimedia coding standard supporting mobile applications" MOBILE NETWORKS AND APPLICATIONS, BALTZER SCIENCE PUBLISHERS, BUSSUM, NL, no. 3, June 1998 (1998-06), pages 5-32, XP002150680 ISSN: 1383-469X * the whole document * | 1-23 | |

|  | | | TECHNICAL FIELDS SEARCHED (IPC) |
|---|---|---|---|
| | | | |

The present search report has been drawn up for all claims

| Place of search | Date of completion of the search | Examiner |
|---|---|---|
| The Hague | 2 November 2006 | Wahrenberg, Annika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Rate Control for Low-Delay Video Communications. *ITU-T SG16 VCEG Q15-A-20*
- *MMS Conformance Document v.2.0.0*
- Technical Specification Group Services and System Aspects; Multimedia Messaging Service (MMS); Media Formats and Codecs (Release-5. *3GPP TS 26.140 v.5.2.0, 3rd Generation Partnership Project*
- Video Codec Test Model, Near-term, version 8 (TMN8) - Release 0. *ITU-T SG16 VCEG Q15-A-59*
- Appendix III: Examples for H.263 encoder/decoder implementations. *ITU-T, Series H: Audiovisual and Multimedia Systems - Recommendation H.263*
- Video Coding for low bit rate communication. *ITU-T Recommendation H.263*
- Final Report from the Video Quality Expert Group on the validation of objective models of the video quality assessment. *ITU-T SG9 COM9-80-E,* June 2000
- **JOHN TURNER.** MSL 1.0 Video Working Group. *SYMBIAN MSL 1.0 Video Recording API Specification - version 1.04*